# EUROPÄISCHE PATENTSCHRIFT

(11) **EP 0 830 919 B1**
(45) Veröffentlichungstag und Bekanntmachung des Hinweises auf die Patenterteilung: **26.07.2000**
(21) Anmeldenummer: 97115857.1
(22) Anmeldetag: 12.09.1997
(51) Int. Cl.: B25B 29/02, B23P 19/06

(54) **Hydraulische Gewindebolzen-spannvorrichtung**
Hydraulic threaded-bolt clamping device
Système de serrage hydraulique à boulon filété

(30) Priorität: 23.09.1996 DE 19638901
(43) Veröffentlichungstag der Anmeldung: 25.03.1998
(73) Patentinhaber: Hohmann, Frank, 59581 Warstein (DE); Hohmann, Jörg, 59872 Meschede (DE)
(72) Erfinder: Hohmann, Frank, 59581 Warstein (DE); Hohmann, Jörg, 59872 Meschede (DE)
(74) Vertreter: Rehders, Jochen

(56) Entgegenhaltungen:
- DE-A- 4 324 888
- DE-A- 4 341 707
- GB-A- 2 291 155
- US-A- 3 995 828

## Beschreibung

Die Erfindung betrifft eine hydraulische Gewindebolzenspannvorrichtung zum Anziehen und Lösen von großen Schrauben mit einem sich auf einem mittels eines Gewindebolzens und einer Mutter zu verspannenden Maschinenteil abstützenden Zylinder, wenigstens einem daran abgedichtet geführten, sich an einer Verlängerung einer auf ein Gewindeende des Gewindebolzens aufgeschraubten Gewindebuchse abstützenden, periodisch druckbeaufschlagten, mit dem Zylinder einen Ringraum bildenden Kolben, einer Druckmittelzufuhr zum Ringraum und einem mit der Druckmittelzufuhr verbundenen, ohne Zählen von Leerhüben nur oberhalb eines vorgebbaren Drucks weiterschaltenden Lastwechselzähler. Eine Gewindebolzenspannvorrichtung gemäß dem Oberbegriff des Anspruchs 1 mit einem koaxial an der Verlängerung der Gewindebuchse angeordneten Nippel für eine daran drehbare Kupplung an einem Druckmittelschlauch ist aus der GB-Patentanmeldung 2 291 155 bekannt.

Gewindebolzenspannvorrichtungen haben die Aufgabe, eine genau vorgegebene Vorspannkraft auf einen Schraubenbolzen aufzubringen, um die auf den Schraubenbolzen aufgeschraubte Mutter anziehen oder lösen zu können. Hierzu wird eine Gewindebuchse in der Gewindebolzenspannvorrichtung auf das überstehende Gewinde oberhalb einer Mutter aufgeschraubt und danach die Gewindebolzenspannvorrichtung unter hydraulischem Druck gesetzt. Das hat zur Folge, daß der Gewindebolzen durch Längen gespannt wird. Die dabei auf den Gewindebolzen aufgebrachten Kräfte sind außerordentlich hoch, wodurch die Gewindebolzenspannvorrichtung und dessen Einzelteile sehr stark beansprucht werden. Um zu vermeiden, daß diese hoch beanspruchten Einzelteile beim Spannen eines Gewindebolzens brechen, weil wegen Überschreiten der von diesen Teilen aufnehmbaren Lastwechsel ein Ermüdungsbruch eintritt, wird angestrebt, die durch Ermüdungsbruch gefährdeten Teile auszuwechseln, bevor ein solcher Ermüdungsbruch eintreten kann. Dieses trifft auch für das vorzeitige Auswechseln anderer Verschleißteile zu, wie z. B. Dichtungen. Der Lastwechselzähler wird durch die periodische Druckbeaufschlagung der Gewindebolzenspannvorrichtung bei jeder Betätigung weitergeschaltet, wobei das Zählen von Leerhüben dadurch vermieden wird, daß der Lastwechselzähler nur oberhalb eines vorgebbaren Drucks weiterschaltet.

Eine derartige Gewindebolzenspannvorrichtung ist in der deutschen Offenlegungsschrift 43 41 707 derselben Anmelder beschrieben. Der vorerwähnte Lastwechselzähler ist in der deutschen Offenlegungsschrift 43 24 888 derselben Anmelder beschrieben. Bei der in der deutschen Offenlegungsschrift 43 41 707 beschriebenen hydraulischen Gewindebolzenspannvorrichtung ist der Lastwechselzähler seitlich an dem Zylinder angeschraubt und steht mit einer radialen Druckmittelzufuhr zum Ringraum in Verbindung.

Sowohl die aus der deutschen Offenlegungsschrift 43 41 707 bekannte Gewindebolzenspannvorrichtung als auch der aus der deutschen Offenlegungsschrift 43 24 888 bekannte Lastwechselzähler haben sich bewährt, jedoch hat sich gezeigt, daß die Anordnung des Lastwechselzählers seitlich am Zylinder der Gewindebolzenspannvorrichtung bei beengten Einbauverhältnissen des Gewindebolzens zu Handhabungsschwierigkeiten führt, da sich der Zylinder nicht immer so ausrichten läßt, daß sich ein Druckmittelschlauch problemlos an den Zylinder der Gewindebolzenspannvorrichtung anschließen läßt.

Der Erfindung liegt daher das Problem zugrunde, die bekannte hydraulische Gewindebolzenspannvorrichtung mit einem Lastwechselzähler so weiterzuentwickeln, daß keine Behinderung beim Anschließen eines Druckmittelschlauchs eintritt und sich der Lastwechselzähler in jeder Stellung der Gewindebolzenspannvorrichtung problemlos ablesen läßt.

Ausgehend von dieser Problemstellung wird eine verbesserte hydraulische Gewindebolzenspannvorrichtung vorgeschlagen, die einen drehbaren Druckmittelanschluß am Zylinder oder am Ende der Verlängerung der auf ein Gewindeende des Gewindebolzen aufgeschraubten Gewindebuchse und einen vom drehbaren Druckmittelanschluß gehaltenen, mit der Druckmittelzufuhr verbundenen Lastwechselzähler aufweist.

Durch die Drehbarkeit des Druckmittelanschlusses ist eine große Freiheit hinsichtlich des Anschlusses eines Druckmittelschlauchs gegeben, ohne daß die Gewindebolzenspannvorrichtung besonders ausgerichtet werden müßte, was bei beengten Raumverhältnissen vorteilhaft ist. Durch die Anordnung des Lastwechselzählers im drehbaren Druckmittelanschluß ist des weiteren gewährleistet, daß sich der Lastwechselzähler unabhängig von der Stellung der Gewindebolzenspannvorrichtung stets problemlos ablesen läßt.

Vorzugsweise kann der Druckmittelanschluß um die Zylinderachslinie drehbar sein, so daß sich ein Anschlußnippel für einen Druckmittelschlauch radial an dem drehbaren Druckmittelanschluß anordnen und sich in alle Richtungen einstellen läßt, wobei der vom Druckmittelanschluß gehaltene Lastwechselzähler stets so gerichtet ist, daß er sich problemlos ablesen läßt.

Wenn die Druckmittelzufuhr zentrisch durch die Verlängerung der Gewindebuchse geführt ist, läßt sich der drehbare Druckmittelanschluß an einem aus dem Zylinder herausgeführten Ende der Verlängerung anordnen und weist Abmessungen auf, die nicht über den Durchmesser des Zylinders der Gewindebolzenspannvorrichtung hinausragen.

Sowohl bei der Anordnung des drehbaren Druckmittelanschlusses am Zylinder als auch bei der Anordnung am Ende der Verlängerung der Gewindebuchse kann der Lastwechselzähler bevorzugterweise einen mit der Druckmittelzufuhr verbundenen, im Druckmittelanschluß angeordneten Zylinder und einen darin abgedichtet mit Federkraft verschiebbaren Kolben aufweisen, wobei ein durch die axiale Kolbenbewegung weiterschaltbares Zählwerk mit einer Ziffernanzeige der gezählten Kolbenbewegungen vorhanden ist und wobei die Federkraft so bemessen ist, daß ein Weiterschalten des Zählwerks ohne Zählen von Leerhüben nur oberhalb eines vorgebbaren Drucks erfolgt.

Vorzugsweise kann dabei die Achse des Zylinders des Lastwechselzählers senkrechte zur Zylinderachslinie und beabstandet dazu verlaufen, während das Zählwerk parallel dazu auf der anderen Seiten der Zylinderachslinie angeordnet sein kann und die Betätigung des Zählwerks mittels eines den Abstand zwischen den Zylinder des Lastwechselzählers und dem Zählwerk überbrückenden Kipphebel erfolgen kann, so daß eine raumsparende und dennoch leicht zugängliche Anordnung erreicht wird.

Um die äußeren Abmessungen des Druckmittelanschlusses einzuhalten, kann der Kipphebel vorzugsweise in einem Ausschnitt des kreisförmigen Druckmittelanschlusses angeordnet und seine Außenfläche den Kreisbogen des Druckmittelanschlusses angepaßt sein.

Die Erfindung wird nachstehend anhand eines in der Zeichnung dargestellten Ausführungsbeispiels des näheren erläutert. In der Zeichnung zeigen:

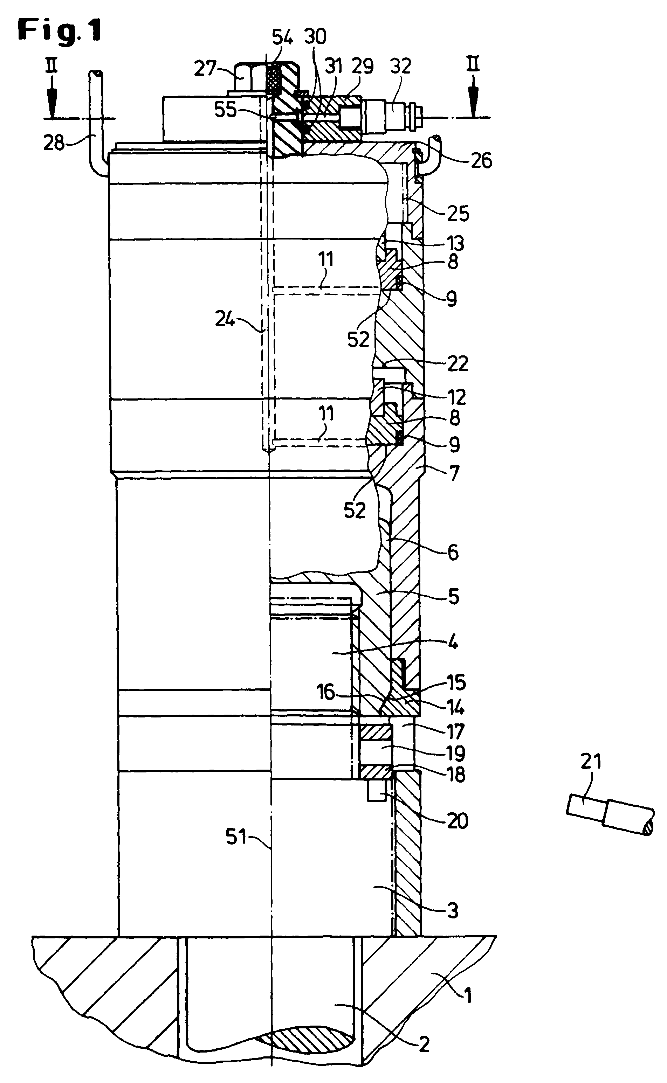

- Fig. 1: einen Längsschnitt durch eine hydraulische Gewindebolzenspannvorrichtung mit drehbarem Druckmittelanschluß und

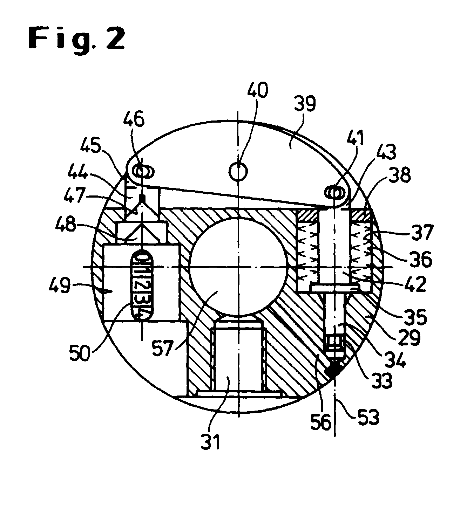

- Fig. 2: einen Querschnitt entlang der Linie II-II in Fig. 2 des Druckmittelanschlusses.

Ein Maschinenteil 1, das z. B. ein Flansch eines Maschinengehäuses sein kann, soll mittels eines Gewindebolzens 2 und einer darauf geschraubten Mutter 3 verspannt werden. Um auf den Gewindebolzen 2 eine genau kontrollierbare Vorspannung aufzubringen und um Torsionsmomente von dem Gewindebolzen 2, die eine zusätzliche Belastung des Gewindebolzens 2 darstellen, fernzuhalten, wird die Mutter zunächst nur von Hand zur Anlage an dem Maschinenteil 1 auf den Gewindebolzen 2 aufgeschraubt. Die Länge des Gewindebolzens 2 ist so bemessen, daß über die Mutter 3 ein freies Gewindeende 4 hervorsteht.

Die Gewindebolzenspannvorrichtung besteht aus einem Zylinder 7 mit mehreren axial versetzten und darin mittels Dichtungen 9, 10 abgedichtet geführten Ringkolben 8, die jeweils mittels eines Gewinderinges 12 und eines Gewinderinges 13 mit einer zylindrischen Verlängerung 6 der Gewindebuchse 5 verschraubt sind.

Am oberen Ende des Zylinders 7 ist ein Tragbügel 28 zur leichten Handhabung der Gewindebolzenspannvorrichtung schwenkbar angeordnet.

Die Gewindebuchse 5 wird auf das freie Gewindeende 4 aufgeschraubt, bis der Zylinder 7 zur Anlage an dem Maschinenteil 1 kommt. Hierzu wird die Gewindebuchse 5 mit der Verlängerung 6 mittels eines an einem Sechskant 27 angreifenden Schlüssels gedreht.

Zwischen dem Zylinder 7 und dem Kolben 8 sind Ringräume 52 gebildet, zu denen Druckmittel über Druckölkanäle 11 geführt werden. Diese Druckölkanäle 11 stehen mit einem zentrischen Druckmittelzufuhrkanal 24 in Verbindung, der im Bereich des Sechskants 27 beginnt und hier mittels eines Stopfens 54 nach außen abgedichtet ist.

Ein drehbarer Druckmittelanschluß 29 ist am freien Ende der zylindrischen Verlängerung 6 angeordnet und dort mittels Dichtungen 30 nach außen abgedichtet. Eine vom Druckmittelzufuhrkanal 24 abgehende Radialbohrung 55 stellt die Verbindung zu einer Radialbohrung 31 im drehbaren Druckmittelanschluß 29 her. Ein Anschlußnippel 32 für einen nicht dargestellten Druckmittelschlauch ist im Bereich der Radialbohrung 31 angeordnet, so daß sich Druckmittel über den erwähnten, nicht dargestellten Druckmittelschlauch, den Anschlußnippel 32, die Radialbohrung 31, die Radialbohrung 55, den Druckmittelzufuhrkanal 24 und die Druckmittelkanäle 11 zu den Ringräumen 52 leiten läßt.

Werden nun die Ringräume 52 mit Druckmittel beaufschlagt, wird der Gewindebolzen 2 mit einer Dehnkraft beaufschlagt, die durch die Axialbewegung der Ringkolben 8 über die Gewinderinge 12, 13 auf die Verlängerung 6 und die damit verbundene Gewindebuchse 5 übertragen wird und von dort auf das freie Gewinde 4 aufgebracht wird.

Die erforderliche Dehnung läßt sich vorherbestimmen und z. B. anhand des Abstandes zwischen dem drehbaren Druckmittelanschluß 29 und einer Kappe 26 am Zylinderende messen. Wenn die erforderliche Dehnung erreicht ist, wird die Mutter gegen das Maschinenteil 1 gedreht. Dies erfolgt dadurch, daß durch eine Nachstellöffnung 17 im Zylinder 7 eine Beistellstange 27 in eine Radialbohrung 19 eines mittels eines Zapfens 20 mit der Mutter 3 verbundenen Nachstellrings 18 eingesteckt wird, wodurch sich die Mutter 3 schrittweise solange weiterdrehen läßt, bis sie auf das Maschinenteil 1 wieder aufsetzt.

Der Zylinder 7 weist ein Fangelement 14 mit einer Kegelfläche 15 auf, der eine entsprechende Kegelfläche 16 an der Gewindebuchse 5 hintergreift.

Reißt nun aufgrund von Ermüdung die Gewindebuchse 5 im Bereich des Endes des herausstehenden Gewindeteils 4, würde die Verlängerung 6 mit den Ringkolben 8 und den Gewinderingen 12, 13 aufgrund der schlagartigen Entspannung des Druckmittels in den Ringräumen 52 und des Zylinders 7 weggeschleudert, wenn der Gewindering 12 nicht zur Anlage an eine Radialfläche 22 des Zylinders 7 käme. Der Zylinder 7 selber kann wegen der Anlage der Kegelfläche 15 des Fangelements 14, die sich an die Kegelfläche 16 der Gewindebuchse 5 anlegt, nicht mit weggeschleudert werden und verhindert auch ein Wegschleudern der von der Gewindebuchse 5 abgerissenen Teile.

Um derartige Ermüdungsbrüche der Gewindebuchse 5 zu verhindern, ist im drehbaren Druckmittelanschluß 29 ein Lastwechselzähler angeordnet. Dieser Lastwechselzähler ist auf einen Schaltdruck von z. B. 1.000 bar eingestellt und zählt daher nur die Lastzyklen, bei denen ein Druck des Druckmittels von mindestens 1.000 bar auftritt, nicht jedoch Leerhübe, bei denen der Druck unterhalb von 1.000 bar bleibt. Die Gewindebuchse 5 ist für eine Dauerfestigkeit von 5.000 Lastwechseln ausgelegt und wird ausgewechselt, wenn der Lastwechselzähler diese 5.000 Lastwechsel anzeigt.

Von einer zentrischen Bohrung 57, die das freie Ende der Verlängerung 6 abgedichtet umgreift, führt eine Radialbohrung 56 zu einer zylindrischen Bohrung 33, deren Achse 53 senkrecht zur Zylinderachslinie 51 und beabstandet dazu verläuft. In dieser zylindrischen Bohrung 33 ist ein Kolben 34 abgedichtet geführt, der sich mit einem Bund 35 auf einer Endfläche einer Ausnehmung 36 im drehbaren Druckmittelanschluß 29 abstützt. Der Bund 35 ist durch ein Federpaket 37 beaufschlagt, die am offenen Ende der Ausnehmung 36 durch einen Abschlußring 38 unverschiebbar gehalten ist. Die Federkraft des Federpakets 37 ist so bemessen, daß der Kolben 33 nur dann vom Druckmittel verschoben wird, wenn dieses Druckmittel einen Druck von mindestens 1.000 bar erreicht, so daß Leerhübe nicht gezählt werden.

Ein Kipphebel 39 ist in einer Ausnehmung des drehbaren Druckmittelanschlusses 29 in einer Lagerung 40 kippbar gelagert. Ein Ende des Kipphebels 39 greift in eine Gabel 43 an einer Verlängerung 42 des Kolbens 34 ein und ist dort mittels eines Zapfens 41 schwenkbar befestigt.

Das andere Ende des Kipphebels 39 wirkt mit einer Gabel 45 eines Zapfens 44 zusammen, der parallel zum Kolben 34 auf der anderen Seite der Zylinderachslinie 51 im drehbaren Druckmittelanschluß 29 geführt ist. In diese Gabel 45 greift das Ende des Kipphebels 39 ein und ist dort mittels eines Zapfens 46 schwenkbar befestigt. Eine V-Nut 47 im Zapfen 44 wirkt mit einem Mitnehmerkeil 48 eines Zählwerks 50 zusammen, das in einer Ausnehmung 49 des drehbaren Druckmittelanschlusses 29 angeordnet ist. Mit jedem Hub des Kolbens 33 wird der Mitnehmerkeil 48 durch die V-Nut 47 im Zapfen 46 gedreht und schaltet die Einerscheibe des Zählwerks 50 um eine Zähleinheit weiter. Die Einzelheiten des mechanischen Schaltvorgangs sind in der deutschen Offenlegungsschrift 43 24 888 beschrieben. Die Ziffernanzeige des Zählwerks 50 läßt sich durch eine entsprechende Ausnehmung im drehbaren Druckmittelanschluß 29 beobachten.

Der Kipphebel 39 ist in seiner äußeren Form der Kreisform des drehbaren Druckmittelanschlusses 29 angepaßt und ragt daher nicht oder nur unwesentlich über diesen hinaus.

Im dargestellten Ausführungsbeispiel handelt es sich um ein mechanisches Zählwerk 50, das rein mechanisch weitergeschaltet wird, jedoch ist es auch möglich, ein elektrisches Zählwerk einzusetzen, das z.B. mittels eines Piezo-Elements mit elektrischen Impulsen zum Weiterschalten beaufschlagt wird.

Die erfindungsgemäße Gewindebolzenspannvorrichtung läßt sich aufgrund des drehbaren Druckmittelanschlusses 29 bei beengten Raumverhältnissen einfach einsetzen und bedienen und bietet aufgrund des Fangelements 14 und des Lastwechselzählers eine große Sicherheit gegen Verletzungen der Bedienungspersonen durch wegfliegende Teile aufgrund eines Ermüdungsbruchs der Gewindebuchse 5.

## Patentansprüche

1. Hydraulische Gewindebolzenspannvorrichtung zum Anziehen und Lösen von großen Schrauben (4) mit
- einem sich auf einem mittels eines Gewindebolzens (2) und einer Mutter (3) zu verspannenden Maschinenteil (1) abstützenden Zylinder (7) mit einer Zylinderachslinie (51),
- wenigstens einem darin abgedichtet geführten, sich an einer Verlängerung (6) einer auf ein Gewindeende (4) des Gewindebolzens (2) aufgeschraubten Gewindebuchse (5) abstützenden, periodisch druckbeaufschlagten, mit dem Zylinder (7) einen Ringraum (52) bildenden Kolben (8) und
- einer Druckmittelzufuhr (11, 24) zum Ringraum (52),
dadurch gekennzeichnet, daß die Vorrichtung
- einen drehbaren Druckmittelanschluß (29) am Zylinder (7) oder am Ende der Verlängerung (6) und
- einen vom drehbaren Druckmittelanschluß (29) gehaltenen, mit der Druckmittelzufuhr (11, 24) verbundenen, ohne Zählen von Leerhüben nur oberhalb eines vorgebbaren Drucks weiterschaltenden Lastwechselzähler (34, 37, 39, 44, 50) aufweist.

2. Hydraulische Gewindebolzenspannvorrichtung nach Anspruch 1, **dadurch gekennzeichnet**, daß der Druckmittelanschluß (29) um die Zylinderachslinie (51) drehbar ist.

3. Hydraulische Gewindebolzenspannvorrichtung nach Anspruch 2, **dadurch gekennzeichnet**, daß die Druckmittelzufuhr (24) zentrisch durch die Verlängerung (6) der Gewindebuchse (5) geführt und der drehbare Druckmittelanschluß (29) an einem aus dem Zylinder (7) herausgeführten Ende der Verlängerung (6) angeordnet ist.

4. Hydraulische Gewindebolzenspannvorrichtung nach Anspruch 1, 2 oder 3, **dadurch gekennzeichnet**, daß der Lastwechselzähler einen mit der Druckmittelzufuhr (24) verbundenen, im Druckmittelanschluß (29) angeordneten Zylinder (33), einen darin abgedichtet gegen Federkraft verschiebbaren Kolben (34) und ein durch die axiale Kolbenbewegung weiterschaltbares Zählwerk (50) mit einer Ziffernanzeige der gezählten Kolbenbewegung aufweist, wobei die Federkraft so bemessen ist, daß ein Weiterschalten des Zählwerks (50) ohne Zählen von Leerhüben nur oberhalb eines vorgebbaren Drucks erfolgt.

5. Hydraulische Gewindebolzenspannvorrichtung nach Anspruch 2 oder 3 und 4, **dadurch gekennzeichnet**, daß die Achse (53) des Zylinders (33) des Lastwechselzählers senkrecht zur Zylinderachslinie (51) und beabstandet dazu verläuft, das Zählwerk (50) parallel dazu auf der anderen Seite der Zylinderachslinie (51) angeordnet ist und die Betätigung des Zählwerks (50) mittels eines den Abstand zwischen dem Zylinder (33) des Lastwechselzählers und dem Zählwerk (50) überbrückenden Kipphebels (39) erfolgt.

6. Hydraulische Gewindebolzenspannvorrichtung nach Anspruch 5, **dadurch gekennzeichnet**, daß der Kipphebel (39) in einem Ausschnitt des kreisförmigen Druckmittelanschlusses (29) angeordnet und seine Außenfläche dem Kreisbogen des Druckmittelanschlusses (29) angepaßt ist.

## Claims

1. A hydraulic threaded-bolt clamping device for tightening and loosening large screws (4), comprising
- a cylinder (7) supported on a machine part (1) which is to be braced by means of a threaded bolt (2) and a nut (3), with a cylinder axis line (51),
- at least one piston (8), which is periodically supplied with pressure, forming an annular chamber (52) with the cylinder (7), which piston is guided in sealed manner therein and is supported on an extension (6) of a threaded bush (5) screwed on to a threaded end (4) of the threaded bolt (2), and
- a means (11, 24) for supplying pressure medium to the annular chamber (52),
characterised in that the device has
- a rotatable pressure-medium connection (29) to the cylinder (7) or at the end of the extension (6) and
- a load alternation counter (34, 37, 39, 44, 50), held by the rotatable pressure-medium connection (29) and connected to the pressure-medium supply means (11, 24), which advances without counting idle strokes only above a presettable pressure.

2. A hydraulic threaded-bolt clamping device according to Claim 1, characterised in that the pressure-medium connection (29) can rotate about the cylinder axis line (51).

3. A hydraulic threaded-bolt clamping device according to Claim 2, characterised in that the pressure-medium supply means (24) is guided centrally through the extension (6) of the threaded bush (5) and the rotatable pressure-medium connection (29) is arranged on an end of the extension (6) which passes out of the cylinder (7).

4. A hydraulic threaded-bolt clamping device according to Claim 1, 2 or 3, characterised in that the load alternation counter has a cylinder (33) connected to the pressure-medium supply means (24) and arranged in the pressure-medium connection (29), a piston (34) displaceable counter to a spring force in sealed manner therein and a counter (50) with a numerical display of the counted piston movement which can be advanced by the axial piston movement, the spring force being calculated such that advancing of the counter (50) without counting idle strokes takes place only above a presettable pressure.

5. A hydraulic threaded-bolt clamping device according to Claim 2 or 3 and 4, characterised in that the axis (53) of the cylinder (33) of the load alternation counter extends at right-angles to the cylinder axis line (51) and spaced apart therefrom, the counter (50) is arranged parallel thereto on the other side of the cylinder axis line (51) and the actuation of the counter (50) is effected by means of a rocking arm (39) which bridges the distance between the cylinder (33) of the load alternation counter and the counter (50).

6. A hydraulic threaded-bolt clamping device according to Claim 5, characterised in that the rocking arm (39) is arranged in a cutout in the circular pressure-medium connection (29) and its outer surface is adapted to the arc of the pressure-medium connection (29).

## Revendications

1. Dispositif de serrage hydraulique à tige filetée pour le serrage et le desserrage de grandes vis (4), comportant
- un cylindre (7) qui prend appui sur une partie de machine (1) à serrer au moyen d'une tige filetée (2) et d'un écrou (3), avec une ligne d'axe (51) du cylindre,
- au moins un piston (8) guidé à l'intérieur de manière étanche, qui prend appui contre un prolongement (6) d'une douille taraudée (5) vissée sur une extrémité filetée (4) de la tige filetée (2), qui est périodiquement alimenté en pression et qui forme une chambre annulaire (52) avec le cylindre (7), et
- une arrivée de fluide sous pression (11, 24) à la chambre annulaire (52),
caractérisé en ce que le dispositif
- présente un raccord tournant (29) en fluide sous pression sur le cylindre (7) ou à l'extrémité du prolongement (6) et
- un compteur de cycles de charge (34, 37, 39, 44, 50) qui est maintenu par le raccord tournant (29) de fluide sous pression, qui est relié à l'arrivée de fluide sous pression (11, 24) et qui tourne sans compter les courses à vide uniquement au-dessus d'une pression à sélectionner.

2. Dispositif de serrage hydraulique à tige filetée selon la revendication 1, caractérisé en ce que le raccord de fluide sous pression (29) peut tourner autour de la ligne d'axe (51) du cylindre.

3. Dispositif de serrage hydraulique à tige filetée selon la revendication 2, caractérisé en ce que l'arrivée de fluide sous pression 24 est guidée centrée par le prolongement (6) de la douille taraudée (5) et le raccord de fluide sous pression (29) tournant est disposé à une extrémité du prolongement (6) qui ressort du cylindre (7).

4. Dispositif de serrage hydraulique à tige filetée selon la revendication 1, 2 ou 3, caractérisé en ce que le compteur de cycles de charge comporte un cylindre (33) relié à l'arrivée de fluide sous pression (24) et disposé dans le raccord de fluide sous pression (29), un piston (34) qui peut coulisser à l'intérieur du cylindre, de manière étanche et à l'encontre de la force d'un ressort, ainsi qu'un mécanisme de comptage (50) qui peut avancer sous l'effet du mouvement axial du piston avec une indication chiffrée du déplacement compté du piston, la force du ressort étant telle que le mécanisme de comptage avance sans compter les courses à vide, uniquement au-dessus d'une pression à sélectionner.

5. Dispositif de serrage hydraulique à tige filetée selon la revendication 2 ou 3 et 4, caractérisé en ce que l'axe (53) du cylindre (33) du compteur de cycles de charge est perpendiculaire à la ligne d'axe (51) du cylindre et s'étend à distance de celle-ci, en ce que le mécanisme de comptage (50) est disposé parallèlement à celui-ci, sur l'autre côté de la ligne d'axe (51) du cylindre et l'actionnement du mécanisme de comptage (50) s'effectue au moyen d'un levier basculant (39) qui franchit la distance entre le cylindre (33) du compteur de cycles de charge et le mécanisme de comptage (50).

6. Dispositif de serrage hydraulique à tige filetée selon la revendication 5, caractérisé en ce que le levier basculant (39) est disposé dans une découpe du raccord du fluide sous pression (29) en forme de cercle et en ce que sa surface extérieure est adaptée à l'arc de cercle du raccord de fluide sous pression (29).
